# EUROPEAN PATENT SPECIFICATION

(11) **EP 2 610 432 B1**
(45) Date of publication and mention of the grant of the patent: **14.10.2015**
(21) Application number: 11290616.9
(22) Date of filing: 26.12.2011
(51) Int. Cl.: E21B 47/00, E21B 47/08, E21B 47/10, B06B 1/06, G01V 1/40

(54) **Downhole ultrasonic transducer and method of making same**
Bohrloch-Ultraschallschwinger und Verfahren zu dessen Herstellung
Transducteur ultrasonique de trou de forage et procédé de fabrication associé

(43) Date of publication of application: 03.07.2013
(73) Proprietor: Services Pétroliers Schlumberger, 75007 Paris (FR); Schlumberger Technology B.V., 2514 JG The Hague (NL); Schlumberger Holdings Limited, Tortola BV1 (VG); PRAD Research and Development Limited, Road Town, Tortola (VG)
(72) Inventor: Teixeira, Jose, 92370 Chaville (FR); Cantin, Gilles, 91370 Verrieres Le Buisson (FR); Correa, Gloria, 92142 Clamart Cedex (FR)
(74) Representative: Rzaniak, Martin

(56) References cited:
- EP-A1- 0 477 575
- EP-A1- 1 986 465
- WO-A1-02/065446
- GB-A- 2 328 746
- US-A- 4 011 473
- US-A1- 2005 000 279
- US-A1- 2008 072 675
- US-B1- 6 466 513

## Description

### BACKGROUND

In the oil and gas industry, subsurface formations can be probed by well logging instruments to determine various formation characteristics. Among these instruments, ultrasonic tools have been used to provide information regarding subsurface ultrasonic properties, which may be used to produce images or derive related characteristics for the formations, as well as evaluate casing or other aspects of completions.

Ultrasonic waves are periodic vibrational disturbances resulting from ultrasonic energy propagating in a medium. Ultrasonic waves can be characterized in terms of their frequency, amplitude, and speed of propagation. Ultrasonic properties of interest may include compressional wave speed, shear wave speed, borehole modes, and formation slowness. Additionally, ultrasonic images may be used to depict borehole wall conditions, cement evaluation, and more. These ultrasonic measurements have applications in seismic correlation, petrophysics, rock mechanics and other areas.

Ultrasonic tools can include one or more ultrasonic sources (i.e., a transmitter) for emitting ultrasonic energy into the subsurface formations and one or more ultrasonic sensors or receivers for receiving ultrasonic energy, or a transducer that may function as both a transmitter and a receiver. The tool may be periodically actuated to emit pulses of ultrasonic energy into the borehole, which travel through the borehole and into the formation, casing or cement. At least some of the ultrasonic energy travels to the tool, where it is detected. Various attributes of the detected ultrasonic energy can be subsequently related to the formation, the casing, completions of the borehole, or tool properties of interest.

GB 2 328 746 A describes an acoustic logging tool useful for measuring the acoustic velocity of ultrasonic waves in formations surrounding an earth borehole, and also as an acoustic caliper tool, in which an ultrasonic element and a backing sub-assembly containing the ultrasonic element and backing material are enclosed within a pair of thermoplastic housings. US 6 466 513 B1 describes an ultrasonic sensor assembly for measuring the diameter of a well while it is being drilled. The sensor assembly includes a stack including an inner sound absorbing backing element, a piezoelectric ceramic disk transducer stacked outwardly adjacent the backing element, and a matching layer, preferable made of PEEK and disposed outwardly adjacent the transducer. US 4011473 A describes an ultrasonic transducer employing a ceramic disc, a rigid housing and a mold a rubber-like elastomer jacket in intimate contact with the outer surface of the housing. EP 0 477 575 A1 describes injection molding of an electronic transducer.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In an embodiment, an ultrasonic transducer assembly as described in claim 1 is disclosed.

In an embodiment, a method as described in claim 9 is disclosed for fabricating an ultrasonic transducer.

### BRIEF DESCRIPTION OF THE DRAWINGS

Embodiments of methods and apparatuses for a compliant transducer housing are described with reference to the following figures. Like numbers are used throughout the figures to reference like features and components.

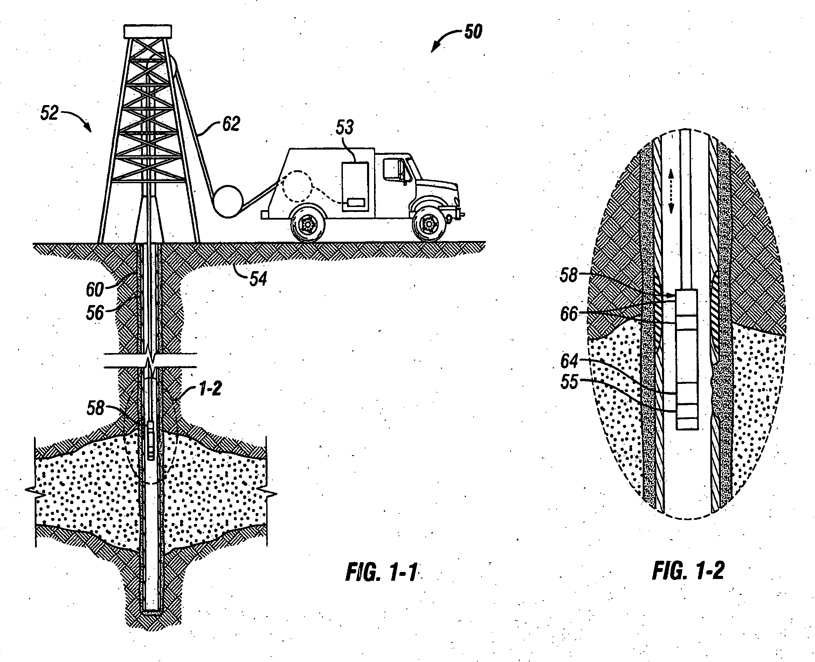

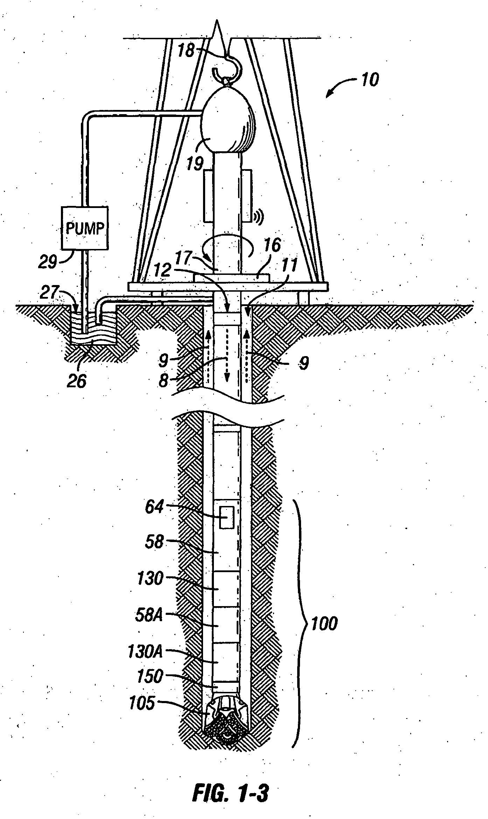

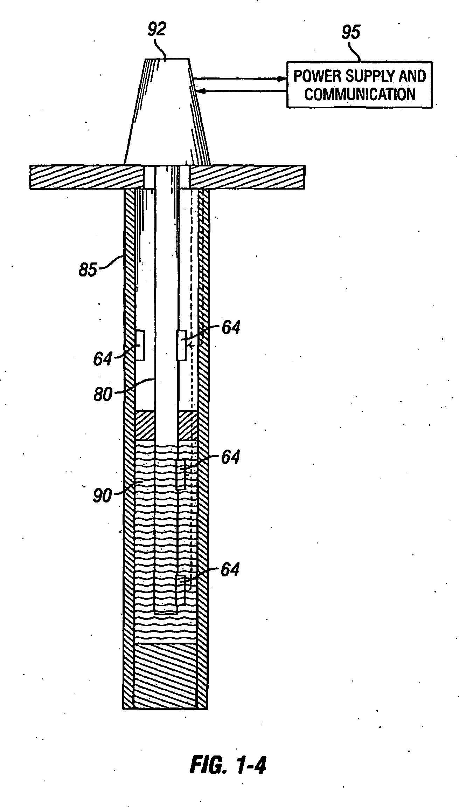

FIG. 1-1 is a schematic diagram showing a view of an example wellsite in which a transducer in accordance with an embodiment of the present disclosure may be used conveyed on a cable.
FIG. 1-2 shows a schematic of a logging tool as used in the wellsite of FIG. 1-1 in accordance with an embodiment of the present disclosure.
FIG. 1-3 is a schematic diagram showing a view of another example wellsite in which a transducer in accordance with an embodiment of the present disclosure may be used conveyed on a drill string in a while-drilling operation.
FIG. 1-4 is a schematic diagram showing a view of an example wellsite in which a transducer in accordance with an embodiment of the present disclosure may be used conveyed on a tubing or casing in a completed well.
FIG. 2-1, 2-2, and 2-3 show various views of an ultrasonic transducer in accordance with an embodiment of the present disclosure.
FIG. 3 shows a cross-sectional view of an ultrasonic transducer fabricated in accordance with a method embodiment.
FIG. 4 shows a cross-sectional view of an ultrasonic transducer fabricated in accordance with a method embodiment.
FIG. 5 shows a cross-sectional view of an ultrasonic transducer fabricated in accordance with still another method embodiment.
FIG. 6 shows a flowchart of a method for fabrication in accordance with the embodiment of FIG. 3.
FIG. 7 shows a flowchart of a method for fabrication in accordance with the embodiment of FIG. 4.
FIG. 8 shows a flowchart of a method for fabrication in accordance with the embodiment of FIG. 5.

### DETAILED DESCRIPTION

In the following description, numerous details are set forth to provide an understanding of the present disclosure. However, it will be understood by those skilled in the art that the present disclosure may be practiced without these details and that numerous variations or modifications from the described embodiments are possible.

The disclosure relates to an ultrasonic transducer having a compliant housing made from a flexible material (e.g., a plastic or rubber material), such that borehole effects (e.g., pressure, temperature, shock and other borehole conditions) can be compensated by deformation of the housing. The compliant housing of the present disclosure may be configured to stress on the piezoelectric element. In at least one embodiment, a transducer rated to about 20 kpsi (1379.3 Bar) and about 175°C can be achieved. Methods for fabricating the ultrasonic transducer are also disclosed.

As referred to herein, "PEEK" refers to a low corrosion, deformable plastic material comprising polyetheretherketone that retains its mechanical properties at high temperatures (e.g., in excess of about 200°C).

As referred to herein, "VITON™" refers to a DUPONT™ registered fluoroelastomer comprising a vinylidenfluoride hexaflouroisopropene copolymer, also deformable and retaining mechanical properties at high temperatures (e.g., in excess of about 200°C). As referred to herein, "CHEMRAZ™" refers to a GREENE-TWEED™ registered perfluoroelastomer, also deformable and retaining mechanical properties at high temperatures (e.g., in excess of about 200°C).

FIG. 1-1 schematically shows a wellsite 50 with surface equipment 52 above a subterranean formation 54 after a drilling operation has been carried out, and a casing string 56 has been run and cemented in place. A logging tool 58 is deployed into a borehole 60. The logging tool includes at least one sensor (e.g. resistivity sonde, mechanical sonde, gamma ray neutron sonde, accelerometer, pressure sensor, temperature sensor, flow-meter, and the like) for measuring at least one downhole parameter. The logging tool 58 may include multiple of the same or different sensors for measuring the parameters.

The logging tool is moved up and down in the borehole for gathering data about the various parameters by means of a cable 62. The cable 62 may be a link for establishing communication between the logging tool 58 and the surface equipment 52. Data related to the formation 54 or to the wellbore 60 may be gathered by the logging tool 58. The surface equipment 52 may be provided with an appropriate data collection and analysis computer or processor 53. A processor 55 may also be positioned in the logging tool 58 as shown in Figure 1-2.

FIG. 1-2 is a magnified view schematically showing the logging tool 58 positioned in a portion of the cased borehole 60. The logging tool 58 includes an ultrasonic transducer 64. The logging tool 58 may also comprise other sensors 66.

FIG. 1-3 schematically shows a wellsite analogous to that of FIG. 1-1, but in a while-drilling context. In lieu of a cable, such as 62 in FIG. 1-1, the logging tool 58 may be disposed on a drill string 12 suspended within the borehole 11. The drill string 12 may have the bottom hole assembly 100 that includes a drill bit 105 at its lower end and the ultrasonic transducer 64 therein. A surface system of the wellsite system of FIG. 1-3 may include a platform and derrick assembly 10 positioned over the borehole 11, the platform and derrick assembly 10 including components such as a rotary table 16, kelly 17, hook 18 and rotary swivel 19, each of which is readily understood by one of ordinary skill in the art.

In the wellsite system of FIG. 1-3, the surface system may also include drilling fluid or mud 26 stored in a pit 27 at the well site. A pump 29 may deliver the drilling fluid 26 to an interior of the drill string 12 via a port in the swivel 19, causing the drilling fluid to flow downwardly through the drill string 12 as indicated by the directional arrow 8. The drilling fluid 26 may exit the drill string 12 via ports in the drill bit 105, and circulating upwardly through the annulus region between the outside of the drill string 12 and the wall of the borehole 11, as indicated by the directional arrows 9. In this manner, the drilling fluid 26 lubricates the drill bit 105 and carries formation cuttings up to the surface, as the drilling fluid 26 is returned to the pit 27 for recirculation.

The bottom hole assembly 100 of the wellsite system of FIG. 1-3 may include the logging tool 58 including an ultrasonic transducer 64 and/or a measuring-while-drilling (MWD) module 130, a logging while drilling module 130A, a roto-steerable system and motor 150, and the drill bit 105. It will also be understood that more than one logging tool can be employed, as generally represented at numeral 58A. The logging tool 58 and MWD module 130 can each be housed in a particular type of drill collar, as is known in the art.

FIG. 1-4 schematically shows a wellsite in a completions operation analogous to the wellsite of FIG. 1-1. One or more units of the ultrasonic transducer 64, as described herein can be deployed along the tubing 80 or/and casing 85 in contact with well fluid 90. The tubing 80 couples to the surface equipment 92 for purposes of producing from the well. The surface equipment is additionally coupled to power supply and communication 95. The ultrasonic transducer 64 according to the present invention may be used for, for example but not limited to, completions operations such as cement evaluation, as well as acoustic communication transmissions along the tubing 80, casing 85, and/or well fluid 90. Such applications are readily recognized by those of ordinary skill in the art.

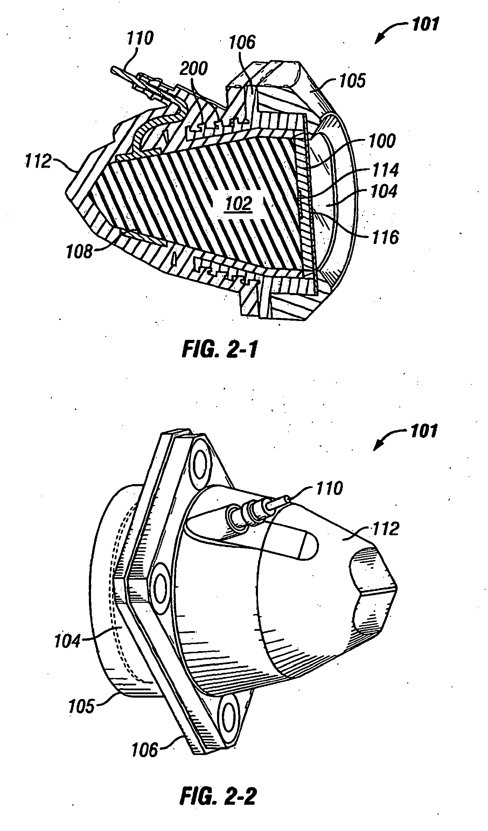

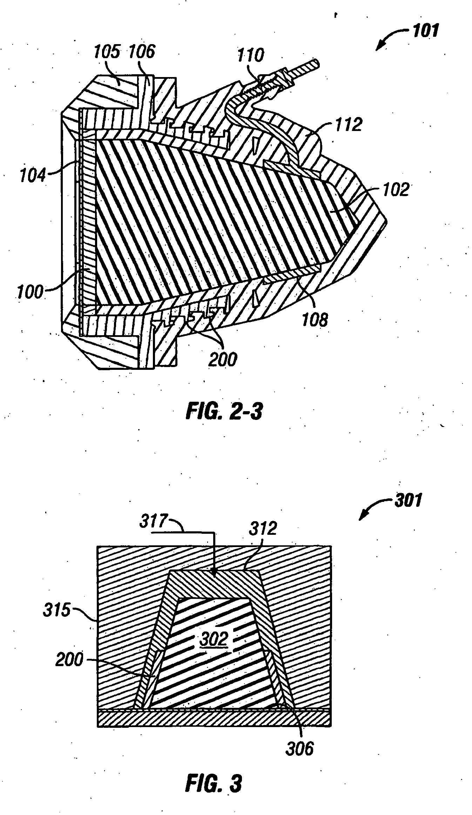

' Referring now to Fig. 2-1, a cross-sectional view of an ultrasonic transducer 101, usable as the ultrasonic transducer 64 of Figure 1-2, and according to an embodiment of the present disclosure is shown. The ultrasonic transducer 101 includes a piezoelectric element 100, a backing 102 and a compliant housing 112. The piezoelectric element 100 may be coupled to the backing 102, with a membrane 104 secured in place adjacent thereto by a bridle 105. The piezoelectric element 100 may be a ceramic material formed into, for example, a disc. The composition, shape, and frequency properties of the piezoelectric element 100 may vary depending on the particular application. Various piezoelectric materials that may be used for the piezoelectric element 100 may include, for example, lead metaniobate, lead zirconate titanate (PZT), ceramic and piezocomposites of columns of active material such as PZT in an inert matrix of epoxy.

Backing 102 can be used, for example, to reduce reflections from an interface between the piezoelectric element 100 and the backing 102, and/or dampen vibrations from the piezoelectric element 100. Backing 102 may be formed in a shape to match the piezoelectric element 100, for example, as a cylindrical shape when the piezoelectric element 100 is a disc. Backing 102 may be formed of any suitable material such as rubber compounds, synthetic resins or mixtures, depending on the type of transducer. Backing 102 may optionally be formed of a conductive material. The backing 102 may be formed of a rubber compound with metallic particles, such as tungsten particles, suspended therein.

The piezoelectric element 100 can be subject to compressional stress from borehole fluid and the borehole environment on one side and the backing 102 on the other. Expansion and contraction of the backing 102 due to pressure and temperature effects may be compensated by deformation of the compliant housing 112 to reduce bending stressed on the piezoelectric element 100.

The membrane 104 is in contact with a front face of the piezoelectric element 100, and caps an end of the ultrasonic transducer that is exposed to the borehole environment. When acting in transmitter mode, the membrane 104 transmits waves to the fluid in the surrounding borehole environment. When acting in receiver mode, the membrane 104 transmits waves from the fluid to the piezoelectric element 100. In some embodiments, the membrane 104 may be a membrane of a material, such as PEEK, metal, rubber, plastic or epoxy.

The membrane 104 may be formed in a concave shape on an outer side such that ultrasonic pulses generated by the ultrasonic transducer 101 may be focused at a particular position of investigation, and ultrasonic pulses detected by the ultrasonic transducer can be focused into the piezoelectric element 100. When a rubber membrane is used, the membrane 104 can be clamped between a mechanical support 106 and the bridle 105 for pressure sealing purposes. When a metallic membrane is used, the membrane 104 can be welded to mechanical support 106.

A mechanical support 106 supports the compliant housing 112. The mechanical support 106 enables the transducer to be attached to the body of the logging tool 58 and enables the bridle 105 to be attached for securing the membrane 104 in place. The mechanical support 106 may be formed of a metallic material, or a material such as PEEK.

An electrical contact 108 is coupled to or about the backing 102. In an embodiment with a disc shaped piezoelectric element 100 and a cylindrical backing 102, the electrical contact 108 may be formed as a ring that encircles the backing 102. An electrical connector 110 may be molded to rigidly connect to electrical contact 108 to a processor (e.g., 53, 55 of Figures 1-1 and 1-2). In some cases, an electrical connection may be provided in the absence of solder connections.

There may also be additional electrical contacts coupled to either side of the piezoelectric element 100. The additional electrical contacts can be sheets of metal or a metal film deposited on the piezoelectric element 100. A back face contact of the additional electrical contact 114 is made by contact with the conductive backing 102. A front face connection is made by a metal tab 116 contacting the front support (which serves as a second electrical connection to the rest of the tool TL).

The compliant housing 112 is disposed about the components of the ultrasonic transducer 101, encapsulating and sealing the components from downhole fluids, such as drilling fluids and the borehole environment, such that the ultrasonic transducer 101 is exposable to downhole fluids. In an embodiment, the compliant housing 112 is formed of PEEK , which is injected at high temperature and cooled. In another embodiment, the compliant housing 112 is formed of VITON™. In another embodiment, the compliant housing 112 is formed of CHEMRAZ™. In embodiments in which the compliant housing 112 is formed of a rubber material such as VITON™ or CHEMRAZ™, the rubber is vulcanized to set. In an embodiment, the compliant housing 112 can be molded with the electrical contact 108 and the mechanical support 106 in place. In some cases, one or more grooves in the housing material can provide sealing in the absence of o-rings. The compliant housing 112 may have a tapered tip at an end thereof opposite the piezoelectric element 100.

Pressure and temperature effects in the borehole environment may be compensated by deformation of the compliant housing 112. The compliant housing 112 may deform with pressure and or temperature to provide an overall transducer design that does not require pressure compensating fluids surrounding the backing 102 and/or piezoelectric element 100. Additionally, the compliant housing 112 enables a design that may not require other pressure/temperature compensating means, such as pistons or bellows.

FIG. 2-2 shows an external view of the ultrasonic transducer 101 of FIG. 2-1. The compliant housing 112 is shown molded to the internal components discussed above (i.e., the piezoelectric element 100, the backing 102, the electrical contact 108) and coupled to the mechanical support 106. The membrane 104 is shown in outline as the non-facing end of the transducer, and the molded connector 110 is shown emerging from the compliant housing 112, within which the molded connector 110 is coupled to the electrical contact 108.

FIG. 2-3 shows a blown-up cross-sectional view of a portion of the transducer shown in FIG. 2-1, showing the detail of the grooves 200 in the mechanical support 106. The mechanical support 106 may optionally include a plurality of grooves. When the compliant housing 112, described in further detail below, is molded to the mechanical support 106, the grooves 200 act to supply a fluid seal. That is, in use, differential temperature expansion of the material (of the compliant housing 112) combined with the groove shape provides a pressure seal, including a seal against fluids and gas. The grooves 200 may be formed in a square shape, L-shape, or trapezoidal shape. The grooves 200 may be fabricated into the mechanical support 106 to enable sealing of the ultrasonic transducer to provide a pressure seal at this location (with or without o-rings). In FIG. 2-1 and 2-3, the grooves 200 are four L-shaped grooves, but the present disclosure would extend to any number of grooves of various shapes in which the material of the compliant housing 112 can expand with pressure and/or temperature.

FIG. 3 shows a cross-sectional view of an ultrasonic transducer 301 and related components analogous to that of Fig. 2-1 in accordance with an embodiment of the present disclosure while under fabrication according to a method of an embodiment of the present disclosure. As shown in FIG. 3, a backing 302 that has previously been fabricated is placed into a mechanical support 306 that has already been fabricated. A combination of the backing 302 and the mechanical support 306 is placed in a mold 315.

Compliant housing material 312, in this embodiment PEEK, is injected into a mold 315 via a PEEK injection point 317. In such an embodiment, the compliant housing material 312 enters grooves 200 in the mechanical support 306, forming a seal with pressure and/or temperature changes once the ultrasonic transducer is in a borehole environment. The entire mold 315 with the components inside may be set, for example cured in an oven, or cooled to solidify, in the case of PEEK (which may, in an embodiment, take approximately 30 seconds to solidify).

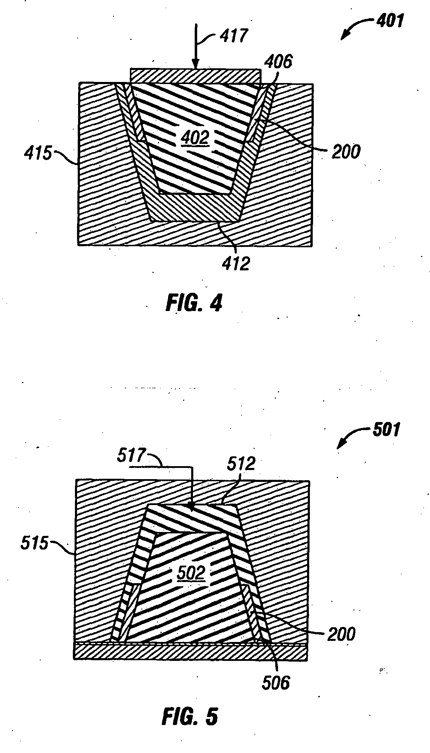

FIG. 4 shows a cross-sectional view of an ultrasonic transducer 401 and related components analogous to that of Fig. 2-1 in accordance with an embodiment of the present disclosure while under fabrication according to a method of another embodiment of the present disclosure. The embodiment illustrated by FIG. 4 can be described as molding a compliant housing 412, and then vulcanizing the rubber-based backing 402 under pressure and temperature inside the molded compliant housing 412. As shown in Figure 4, a mold 415 can be used to support the compliant housing 412.

A mechanical support 406 may be coupled to the backing 402 with electrical connections in place, can be placed into the compliant housing 412 in the mold 415. A vulcanization applicator 417 may be applied to vulcanize the backing 402 while the backing 402 is in place inside the previously molded compliant housing 412. As with the embodiment of Figure 3, the grooves 200 in the mechanical support 406 may be filled with the elastomer when the elastomer is disposed in the mold 415 (such as by injection or being poured), forming a seal in the absence of a separate o-ring at that particular location. A pressure applicator similar in form to vulcanization applicator 417 may be applied for pressure treatment of a previously vulcanized backing, as will be discussed further herein.

FIG. 5 shows a cross-sectional view of an ultrasonic transducer 501 and related components analogous to that of Fig. 2-1 while under fabrication according to a method of another embodiment of the present disclosure. In this version, the ultrasonic transducer is in an inverted position. In the embodiment shown in FIG. 5, a backing 502 may be prepared previously, and assembled with the mechanical support and electrical connections. The assembled components can be placed in a mold 515, and an elastomer housing 512 material injected at an elastomer injection point 517. In an embodiment, the elastomer may be selected as VITON™, which may have, when compared with PEEK, a higher permeability to gas. As with the embodiment of Figure 3, the grooves 200 in the mechanical support may be filled with the elastomer for forming a seal.

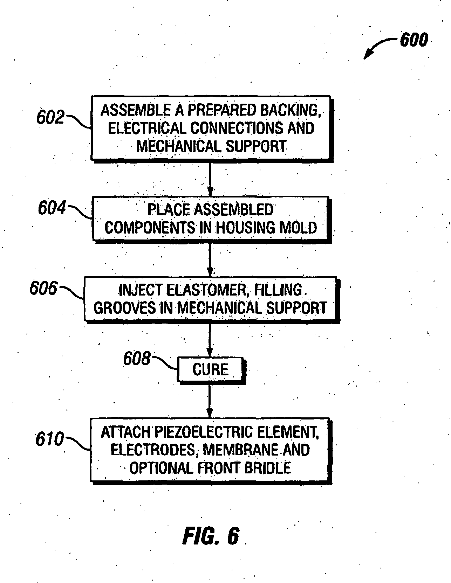

Figure 6 shows a flowchart of a method 600 for fabrication of an ultrasonic transducer according to still another embodiment of the present disclosure (see, e.g., FIG. 3). At 602, the method can include assembling a prepared backing with electrical connections and mechanical support. At 604, the method can include placing the assembled components into a housing mold. At 606, the method can include injecting the compliant housing material, such as an elastomer, into the housing mold, thereby filling the grooves in the mechanical support. At 608, the method can include curing the elastomer. At 610, the method can include attaching the piezoelectric element to the backing, the electrical contacts to the electrical connections and the backing or piezoelectric element, and membrane (and optional bridle) to the piezoelectric element.

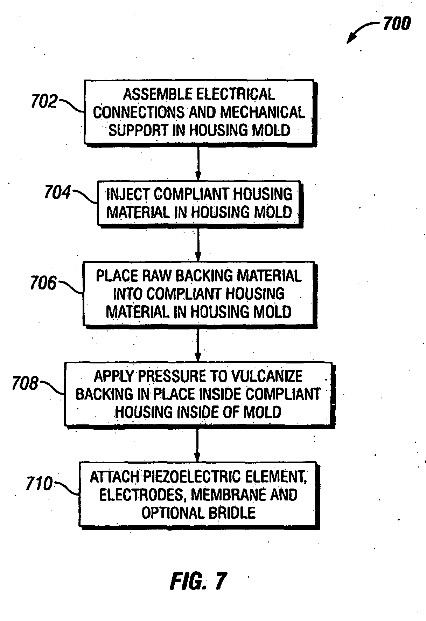

Figure 7 shows a flowchart of a method 700 for fabrication of an ultrasonic transducer according to another embodiment of the present disclosure (see, e.g., FIG. 4). At 702, the method can include assembling the mechanical support and electrical connections in a housing mold. At 704, the method can include injecting the compliant housing material into the housing mold. At 706, the method can include placing a raw backing material into the compliant housing material in the housing mold. At 708, the method can include applying pressure to vulcanize the raw backing material in place inside the compliant housing inside of the housing mold. At 710, the method can include attaching the piezoelectric element to the backing, the electrical contacts to the electrical connections and the backing or piezoelectric element, and membrane (and optional bridle) to the piezoelectric element.

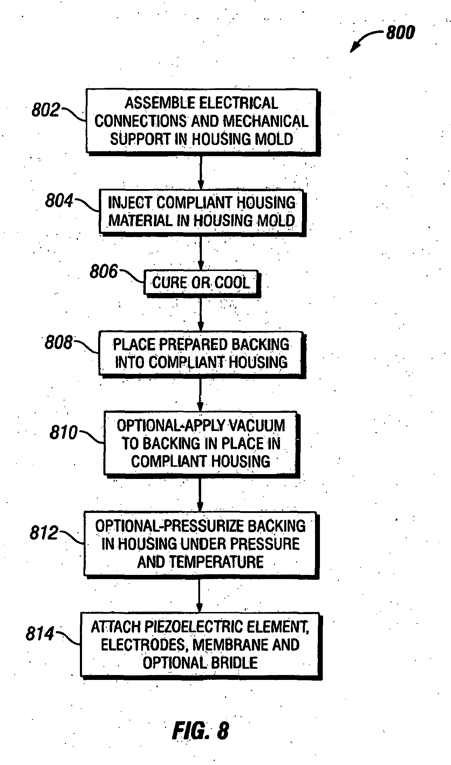

FIG. 8 shows a flowchart of a method 800 for fabrication of an ultrasonic transducer according to an embodiment of the present disclosure (see, e.g., FIG. 5). At 802, the method can include assembling transducer components (or assembled components if assembled prior to insertion into the mold), such as the mechanical support and electrical connector, in the housing mold. At 804, the method can include injecting the compliant housing material into the housing mold. At 806, the method can include setting (e.g., curing or cooling) the injected compliant housing material. For example, some materials set by baking at a certain temperature, while other materials set by cooling. In an embodiment, PEEK material may set by cooling for about 30 seconds.

The compliant housing may, by virtue of the mold, have voids in the shape and dimension of the backing such that the backing may be inserted. The method can include placing 808 a previously prepared backing into the compliant housing material in the mold. A previously prepared backing is a backing material that has already been vulcanized, as compared with a raw backing material that has not been vulcanized. At 810, the method can optionally include vulcanizing the backing while the backing is in place in the compliant housing material. At 812, the method can optionally include pressurizing the backing (previously vulcanized) in the compliant housing material under pressure and temperature. At 814, the method can include attaching the piezoelectric element to the backing, the electrical contacts to the electrical connections and the backing or piezoelectric element, and membrane (and optional bridle) to the piezoelectric element.

While the disclosure has been disclosed with respect to a limited number of embodiments, those skilled in the art, having the benefit of this disclosure, will appreciate numerous modifications and variations therefrom. While the disclosure has been described in the context of applications in downhole tools, the apparatus of the disclosure can be used in many applications.

Although a few example embodiments have been described in detail above, those skilled in the art will readily appreciate that many modifications are possible in the example embodiments without materially departing from this invention. Accordingly, such modifications are intended to be included within the scope of this disclosure as defined in the following claims.

## Claims

1. An ultrasonic transducer (101) for a downhole tool (58) positionable in a borehole (60) penetrating a subterranean formation (54), comprising:
a piezoelectric element (100) that converts electrical current into ultrasonic waves, and detects ultrasonic waves and converts the detected ultrasonic waves into electric current;
a backing (102) coupled to the piezoelectric element (100) that attenuates the ultrasonic waves;
a compliant housing (112) disposed about the backing (102), wherein the compliant housing (112) is molded in one piece and is configured to deform to temperature or pressure and to encapsulate and seal the piezoelectric element (100) and the backing (102) from downhole fluids; and
a mechanical support (106) coupled to the piezoelectric element (100) and the backing (102), wherein the mechanical support (106) has at least one groove (200) on an outer surface thereof for forming a seal with the compliant housing (112).

2. The ultrasonic transducer (101) according to claim 1, wherein the ultrasonic transducer is exposable to a drilling fluid (26).

3. The ultrasonic transducer (101) according to claim 1 or 2, further comprising at least one electrical contact (108).

4. The ultrasonic transducer (101) according to any preceding claim, further comprising a connector (110) extending through the compliant housing (112) for operatively connecting to the at least one electrical contract (108) and a processor (53).

5. The ultrasonic transducer (101) according to any preceding claim, wherein the compliant housing (112) has a tapered tip.

6. The ultrasonic transducer (101) according to any preceding claim, wherein the compliant housing (112) comprises polyetheretherketone, a perfluoroelastomer, or a vinylidenfluoride hexaflouroisopropene copolymer.

7. The ultrasonic transducer (101) according to any preceding claim, further comprising a membrane (104) positionable about a front face of the piezoelectric element (100) for transmitting waves from the borehole (60).

8. The ultrasonic transducer (101) according to claim 7, further comprising a bridle (105) for securing the membrane (104) in place.

9. A method for fabricating an ultrasonic transducer (101) for a downhole tool (58) positionable in a borehole (60) penetrating a subterranean formation (54), comprising:
disposing transducer components comprising a mechanical support (106), at least one electrical contact (108) and an electrical connector (110) in a housing mold (315);
positioning a backing (102) that attenuates waves into the housing mold (315);
molding a compliant housing (112) in one piece into the housing mold (315) and about the transducer components in the housing mold (315), the compliant housing (112) being deformable to borehole conditions and encapsulating and sealing the transducer components from downhole fluids;
affixing to the backing (102) a piezoelectric element (100) that detects ultrasonic waves and converts the detected ultrasonic waves into an electric current and at least one electrical contact (108) coupled to the backing (102) and the transducer components; and
forming at least one groove (200) into the mechanical support (106).

10. The method according to claim 9, further comprising setting the compliant housing (112) in the housing mold (315).

11. The method according to claim 9 or 10, further comprising assembling the transducer components prior to the disposing transducer components.

12. The method according to any of claims 9-11, further comprising treating the backing (102) by applying a vacuum, vulcanizing, or pressurizing the backing (102) under pressure and temperature.

13. The method according to any of claims 9-12, further comprising operatively connecting the electrical connector (110) to a processor (53) and the at least one electrical contact (108).

14. The method according to any of claims 9-13, wherein the disposing the compliant housing (112) comprises injecting the compliant housing (112) into the housing mold (315).

15. The method according to any of claims 9-14, further comprising affixing a membrane (104) about a front face of the piezoelectric element (100).

## Patentansprüche

1. Ultraschallwandler (101) für ein Bohrlochwerkzeug (58), das in einem Bohrloch (60), das in eine unterirdische Formation (54) eindringt, positionierbar ist, der umfasst:
ein piezoelektrisches Element (100), das einen elektrischen Strom in Ultraschallwellen umsetzt und Ultraschallwellen detektiert und die detektierten Ultraschallwellen in einen elektrischen Strom umsetzt;
eine Hinterfüllung (102), die an das piezoelektrische Element (100) gekoppelt ist und die Ultraschallwellen abschwächt;
ein konformes Gehäuse (112), das um die Hinterfüllung (102) angeordnet ist, wobei das konforme Gehäuse (112) in einem Stück ausgeformt ist und konfiguriert ist, sich mit der Temperatur oder dem Druck zu verformen und das piezoelektrische Element (100) und die Hinterfüllung (102) einzuschließen und gegen Bohrlochfluide abzudichten; und
ein mechanisches Tragelement (106), das an das piezoelektrische Element (100) und die Hinterfüllung (102) gekoppelt ist, wobei das mechanische Tragelement (106) auf einer seiner äußeren Flächen mindestens eine Kerbe (200) besitzt, um mit dem konformen Gehäuse (112) eine Dichtung zu bilden.

2. Ultraschallwandler (101) nach Anspruch 1, wobei der Ultraschallwandler einem Bohrfluid (26) aussetzbar ist.

3. Ultraschallwandler (101) nach Anspruch 1 oder 2, der ferner mindestens einen elektrischen Kontakt (108) umfasst.

4. Ultraschallwandler (101) nach einem vorhergehenden Anspruch, der ferner ein Verbindungselement (110) umfasst, das sich durch das konforme Gehäuse (112) erstreckt, um betriebstechnisch mit dem mindestens einen elektrischen Kontakt (108) und einem Prozessor (53) verbunden zu sein.

5. Ultraschallwandler (101) nach einem vorhergehenden Anspruch, wobei das konforme Gehäuse (112) eine spitz zulaufende Spitze besitzt.

6. Ultraschallwandler (101) nach einem vorhergehenden Anspruch, wobei das konforme Gehäuse (112) Polyetheretherketon, ein Perfluorelastomer oder ein Vinylidenfluorid-Hexafluorisopropen-Copolymer umfasst.

7. Ultraschallwandler (101) nach einem vorhergehenden Anspruch, der ferner eine Membran (104) umfasst, die um eine Vorderseite des piezoelektrischen Elements (100) positionierbar ist, um Wellen von dem Bohrloch (60) zu senden.

8. Ultraschallwandler (101) nach Anspruch 7, der ferner einen Zaum (105) umfasst, um die Membran (104) an der Stelle zu sichern.

9. Verfahren zum Herstellen eines Ultraschallwandlers (101) für ein Bohrlochwerkzeug (58), das in einem Bohrloch (60), das in eine unterirdische Formation (54) eindringt, positionierbar ist, das umfasst:
Anordnen von Wandlerkomponenten, die ein mechanisches Tragelement (106), mindestens einen elektrischen Kontakt (108) und ein elektrisches Verbindungselement (110) in einer Gehäuseform (315) umfassen;
Positionieren einer Hinterfüllung (102), die Wellen in die Gehäuseform (315) abschwächt;
Ausformen eines konformen Gehäuses (112) in einem Stück in die Gehäuseform (315) und um die Wandlerkomponenten in der Gehäuseform (315), wobei das konforme Gehäuse (112) zu Bohrlochbedingungen verformbar ist und die Wandlerkomponenten einschließt und gegenüber Bohrlochfluid abdichtet;
Befestigen eines piezoelektrischen Elements (100), das Ultraschallwellen detektiert und die detektierten Ultraschallwellen in einen elektrischen Strom umsetzt, und mindestens eines elektrischen Kontakts (108), der an die Hinterfüllung (102) und die Wandlerkomponenten gekoppelt ist, an der Hinterfüllung (102); und
Bilden mindestens einer Kerbe (200) in dem mechanischen Tragelement (106).

10. Verfahren nach Anspruch 9, das ferner umfasst, das konforme Gehäuse (112) in die Gehäuseform (315) einzusetzen.

11. Verfahren nach Anspruch 9 oder 10, das ferner umfasst, die Wandlerkomponenten vor dem Anordnen der Wandlerkomponenten zusammenzufügen.

12. Verfahren nach einem der Ansprüche 9-11, das ferner umfasst, die Hinterfüllung (102) durch Anwenden eines Unterdrucks, einer Vulkanisation oder eines Beaufschlagens der Hinterfüllung (102) mit Druck und Temperatur zu behandeln.

13. Verfahren nach einem der Ansprüche 9-12, das ferner umfasst, das elektrische Verbindungselement (110) mit einem Prozessor (53) und dem mindestens einen elektrischen Kontakt (108) betriebstechnisch zu verbinden.

14. Verfahren nach einem der Ansprüche 9-13, wobei das Anordnen des konformen Gehäuses (112) umfasst, das konforme Gehäuse (112) in die Gehäuseform (315) einzuspritzen.

15. Verfahren nach einem der Ansprüche 9-14, das ferner umfasst, eine Membran (104) um eine Vorderfläche des piezoelektrischen Elements (100) zu befestigen.

## Revendications

1. Transducteur ultrasonique (101) pour un outil de fond de trou (58) positionnable dans un trou de forage (60) pénétrant dans une formation souterraine (54), comprenant :
un élément piézoélectrique (100) qui convertit un courant électrique en ondes ultrasoniques, et détecte des ondes ultrasoniques et convertit les ondes ultrasoniques détectées en courant électrique ;
un renfort (102) couplé à l'élément piézoélectrique (100) qui atténue les ondes ultrasoniques ;
un boîtier souple (112) disposé autour du renfort (102), dans lequel le boîtier souple (112) est moulé d'une seule pièce et configuré pour se déformer en fonction de la température ou de la pression et pour encapsuler et assurer l'étanchéité de l'élément piézoélectrique (100) et du renfort (102) vis-à-vis de fluides de fond de trou ; et
un support mécanique (106) couplé à l'élément piézoélectrique (100) et au renfort (102), dans lequel le support mécanique (106) a au moins une gorge (200) sur une de ses surfaces extérieures pour former un joint d'étanchéité avec le boîtier souple (112).

2. Transducteur ultrasonique (101) selon la revendication 1, dans lequel le transducteur ultrasonique est exposable à un fluide de forage (26).

3. Transducteur ultrasonique (101) selon la revendication 1 ou 2, comprenant en outre au moins un contact électrique (108).

4. Transducteur ultrasonique (101) selon l'une quelconque des revendications précédentes, comprenant en outre un connecteur (110) s'étendant à travers le boîtier souple (112) pour se connecter fonctionnellement au au moins un contact électrique (108) et un processeur (53).

5. Transducteur ultrasonique (101) selon l'une quelconque des revendications précédentes, dans lequel le boîtier souple (112) comporte une pointe effilée.

6. Transducteur ultrasonique (101) selon l'une quelconque des revendications précédentes, dans lequel le boîtier souple (112) comprend une polyétheréthercétone, un perfluoroélastomère, ou un copolymère de fluorure de vinylidènehexafluoroisopropène.

7. Transducteur ultrasonique (101) selon l'une quelconque des revendications précédentes, comprenant en outre une membrane (104) positionnable autour d'une face avant de l'élément piézoélectrique (100) pour transmettre des ondes provenant du trou de forage (60).

8. Transducteur ultrasonique (101) selon la revendication 7, comprenant en outre une bride (107) pour arrimer la membrane (104) en place.

9. Procédé de fabrication d'un transducteur ultrasonique (101) pour un outil de fond de trou (58) positionnable dans un trou de forage (60) pénétrant dans une formation souterraine (54), comprenant :
la disposition de composants de transducteur comprenant un support mécanique (106), au moins un contact électrique (108) et un connecteur électrique (110) dans un moule de boîtier (315) ;
le positionnement d'un renfort (102) qui atténue des ondes dans le moule de boîtier (315) ;
le moulage d'un boîtier souple (112) d'une seule pièce dans le moule de boîtier (315) et autour des composants de transducteur dans le moule de boîtier (315), le boîtier souple (112) étant déformable en fonction de conditions de trou de forage et encapsulant et assurant une étanchéité des composants de transducteur vis-à-vis de fluides de fond de trou ;
la fixation au renfort (102) d'un élément piézoélectrique (100) qui détecte des ondes ultrasoniques et convertit les ondes ultrasoniques détectées en un courant électrique et d'au moins un contact électrique (108) couplé au renfort (102) et aux composants de transducteur ; et
la formation d'au moins une gorge (200) dans le support mécanique (106).

10. Procédé selon la revendication 9, comprenant en outre le durcissement du boîtier souple (112) dans le moule de boîtier (315).

11. Procédé selon la revendication 9 ou 10, comprenant en outre l'assemblage des composants de transducteur avant la disposition des composants de transducteur.

12. Procédé selon l'une quelconque des revendications 9 à 11, comprenant en outre le traitement du renfort (102) par application d'un vide, vulcanisation ou pressurisation du renfort (102) sous pression et température.

13. Procédé selon l'une quelconque des revendications 9 à 12, comprenant en outre la connexion fonctionnelle du connecteur électrique (110) à un processeur (53) et au au moins un contact électrique (108).

14. Procédé selon l'une quelconque des revendications 9 à 13, dans lequel la disposition du boîtier souple (112) comprend l'injection du boîtier souple (112) dans le moule de boîtier (315).

15. Procédé selon l'une quelconque des revendications 9 à 14, comprenant en outre la fixation d'une membrane (104) autour d'une face avant de l'élément piézoélectrique (100).
